# EUROPEAN PATENT SPECIFICATION

(11) **EP 2 520 178 B1**
(45) Date of publication and mention of the grant of the patent: **29.11.2017**
(21) Application number: 12166862.8
(22) Date of filing: 04.05.2012
(51) Int. Cl.: A23L 7/117, A23L 29/212

(54) **REDUCED ACRYLAMIDE SNACK PRODUCT AND METHOD FOR THE MANUFACTURE THEREOF**
SNACK-PRODUKT MIT GERINGEREM ACRYLAMID-ANTEIL UND HERSTELLUNGSVERFAHREN DAFÜR
PRODUIT DE GRIGNOTAGE À ACRYLAMIDE RÉDUITE ET SON PROCÉDÉ DE FABRICATION

(30) Priority: 06.05.2011 GB 201107580
(43) Date of publication of application: 07.11.2012
(73) Proprietor: KP Snacks Limited, Hayes Middlesex UB4 8EE (GB)
(72) Inventor: Sevenou, Olivier Dr., Maidenhead, Berkshire SL6 1NU (GB)
(74) Representative: Becker Kurig Straus

(56) References cited:
- WO-A1-99/20125
- WO-A1-2005/011406
- WO-A2-2008/024926
- US-A- 5 429 834
- US-A- 6 042 867
- US-A1- 2004 067 282

## Description

The invention relates to snack food products. In particular, but not exclusively, the invention relates to sheeted snack food products and to methods of making them.

Snack products fall into a wide variety of different types. Especially popular with consumers are bagged flavoured snacks, which may be for instance in the form of cooked fresh potato pieces (potato crisps) or fabricated savoury snacks. Fabricated snack products made mainly of potato ingredients have been especially well accepted by consumers since 1950. Some of these products were made possible due to the development of potato dehydrated ingredients made by dehydration of cooked mashed potato. The use of potato dehydrates together with different processes have allowed development of a large range of new snack textures going from hard crunchy to light melt-in -the-mouth texture which are appealing to consumers. Especially of interest is the use of a specific potato dehydrated ingredient called low leach potato flake which allows delivery of a light crunchy texture which still melts in the mouth. Fabricated snacks, made mainly of potato ingredients, can be made by forming a dough, usually consisting at least principally of one or more dehydrated potato ingredients and water, sheeting and cutting pieces from the dough, and cooking the pieces, preferably by frying. Fabricated savoury snacks offer a number of advantages over potato crisps. For example, they provide considerably greater flexibility in terms of the available shapes, dimensions and configurations, since the dough is very malleable and can easily be deformed to provide a desired configuration such as a corrugated configuration having a specified wavelength, amplitude and thickness. Further, and importantly, fabricated snacks allow greater consistency in the texture and appearance of the product.

In 2002, scientists discovered a potential new risk in that unexpectedly high amounts of the chemical acrylamide were found in a wide range of foods including potato crisps, French fries, and other salted snacks as well as bread, crispbread, breakfast cereals, biscuits and coffee. Acrylamide is produced naturally when starchy foods are cooked at high temperatures. Acrylamide has been classified by the International Agency for Research on Cancer (IARC) as "probably carcinogenic for humans" and is recognised by the EU Scientific Committee on Food as a genotoxic carcinogen. As a result the UK Food Standards Agency states that in its view acrylamide is considered to be a genotoxic carcinogen and believes that dietary exposure to this chemical should follow the ALARA (as low as reasonably achievable) principles. The foods affected include, especially, starchy food products. The formation of acrylamide is related to the temperature and duration of cooking, with high acrylamide levels often being found in, for example, fried products. Thus, whilst starchy food products with potato-derived ingredients, including potato crisps and fabricated snacks based on potato, are very popular with consumers, there is a need to consider, and where appropriate to reduce, the acrylamide content of those snacks.

The pathway for acrylamide formation was identified in 2002, when it was noted that the formation of acrylamide is linked with the Maillard reaction, a reaction that has been known for many years to be associated with the generation of flavour and colour in cooked food, especially fried products such as potato crisps and fabricated snacks. Formation of acrylamide occurs as a result of reaction between asparagine and reducing sugars in the food product. Asparagine is present in significant quantities in potato and cereals and the formation of acrylamide is favoured when processing is carried out at high temperatures, for example, exceeding 120°C.

It has been proposed to reduce the formation of acrylamide in snack products by using a low temperature cooking step to finish the cooking of the product. Processes using such a low temperature cooking step to finish cooking of the product have been long known to reduce the occurrence of undesirable levels of browning and to reduce off-flavours, by providing conditions which are unfavourable to the Maillard reaction. The requirement for a lower temperature finishing step makes the process more complicated in terms of apparatus requirements and control.

Other methods known for reducing acrylamide formation include the use of enzymes, chemical additives or process conditions to destroy or inactivate one or more of the components that play a part in the acrylamide pathway. For example, asparagine may be degraded by use of asparaginase and/or reducing sugar content can be reduced by washing. The use of enzymic or chemical processing aids adds to the complexity of the process and, where residues remain in the final product, can lead to off-notes in the product flavour. Whilst reducing sugar concentration may to some extent be decreased by elution with water, the removal of other ingredients, especially loose starch, can lead to loss of texture in the final product. WO99/20125 discloses snack food products. A pregelatinized waxy starch provides for the production of cohesive, continuously machineable doughs from starchy materials or ingredients having starch with no- or low-gluten contents. The pregelatinized waxy starch is admixed with only a portion of the at least one starchy material and only a portion of the water needed to form a machineable dough. This mixing procedure results in uniform hydration of the pregelatinized waxy starch and avoids tearing of the dough sheet during machining. The moisture content of the dough sheets is reduced substantially from above about 25% by weight by heating in air, preferably in a gas-fired oven, to obtain chip-like snacks, such as potato chips and corn chips, having a low oil content, a blistered appearance, and a crisp texture..

US5429834 discloses the production of chip-like starch based snacks. A pregelatinized waxy starch provides for the production of cohesive, continuously machineable doughs from starchy materials or ingredients having starch with no- or low-gluten contents. The pregelatinized waxy starch is admixed with only a portion of the at least one starchy material and only a portion of the water needed to form a machineable dough. This mixing procedure results in uniform hydration of the pregelatinized waxy starch and avoids tearing of the dough sheet during machining. The moisture content of the dough sheets is reduced substantially from above about 25% by weight by heating in air, preferably in a gas-fired oven, to obtain chip-like snacks, such as potato chips and corn chips, having a low oil content, a blistered appearance, and a crisp texture. There remains a need for snack products, especially potato-flavoured snacks, that have good texture and flavour, whilst having low levels of acrylamide, without the use of processing aids and additives, for example, the use of asparaginase.

The invention provides a cooked, sheeted snack food product having a reduced acrylamide content, including a wheat flour which comprises waxy wheat flour, and low leach potato flakes, wherein the waxy wheat flour is present in an amount of not more than 50 % by weight, based on the total weight of ingredients excluding water, and said snack food product having a moisture content of not more than 3 % by weight, based on the total weight of the product. References herein to "waxy wheat flour" refer to a flour made from waxy wheat.

The term "waxy wheat" as used herein refers to wheat varieties of which the starch content contains a higher proportion of amylopectin and a smaller proportion of amylose as compared with ordinary wheat varieties. Preferably, the waxy wheat flour contains a starch component comprising amylopectin and optionally amylose, the amylose, where present, being in an amount of not exceeding 5% by weight based on the total weight of said amylopectin and amylose. In preferred waxy wheat flours, the proportion of amylose is not exceeding 2% by weight based on the total weight of amylopectin and amylose.

The invention further provides a process for manufacture of a cooked snack food product having reduced acrylamide content, comprising: preparing a dough including a wheat flour and low leach potato flakes, wherein the wheat flour comprises a waxy wheat flour, said waxy wheat flour being present in an amount of not more than 50 % by weight, based on the total weight of dough ingredients excluding water, and wherein the waxy wheat flour present is at least partly in the form of precooked waxy wheat flour; forming the dough into a sheet; cutting a multiplicity of pieces from the sheet; and cooking said pieces to obtain a snack food product having a moisture content of not exceeding 3% by weight based on the total weight of the food product. The product and process of the invention have the advantage that the doughs used have good process ability whilst the resultant product has reduced acrylamide content, especially when compared with snack products made primarily from potato-derived material.

In accordance with the invention, there is used in a snack product a waxy wheat flour. Waxy wheat flours are known, and as already mentioned have a starch content which is made up essentially of amylopectin, with no more than a minor proportion of amylose. The proportion of amylose is thus less than that in non-waxy wheat flours and is preferably not more than 5% and especially not more than 2% by weight, based on the total weight of amylopectin and amylose. Amylopectin is structurally different from amylose. Amylopectin has a highly branched polymeric skeleton, whilst amylose is essentially a linear polymer. The structural differences give rise to differences in functionality of the two starches. For example, amylose has a higher density and is soluble in water, whilst the branched structure in amylopectin results in a lower density, and amylopectin is essentially insoluble in water. The differences contribute to different viscoelastic behaviours of doughs.

As already mentioned, it is known in snack product manufacture to use potato flakes, which are a form of dehydrated potato made by boiling potato, mashing the potato and dehydrating the mashed potato, usually using drum drying, to form flakes. Particularly preferred in snack manufacture are "low leach" potato flakes, which have a high level of extracellular starch. The extracellular starch is predominantly amylopectin. The use of the low leach potato flake has been found to give snack products with a light, crunchy, "melting" texture. Further, the low leach flakes are particularly advantageous in the manufacture of sheeted snacks, as the extracellular amylopectin has advantageous viscoelastic properties resulting in a dough which has good elasticity and low stickiness, making it easy to process. Other potato dehydrates do not contain the extracellular amylopectin, or contain it only at relatively low levels compared to the low leach potato flakes.

Like other potato-derived ingredients of fabricated snacks, low leach potato flake contains asparagine and reducing sugars. It is a disadvantage of the snack products made using low leach potato flake that, under certain processing conditions, especially when fried, they may contain material amounts of acrylamide arising from reaction of the asparagine with the reducing sugars present in potato-derived materials. It would be desirable to reduce the amount of acrylamide in such snacks. In practice, however, it has been found that the replacement of the low leach potato flakes by alternative ingredients detrimentally affects processability of the dough and/or detrimentally affects the organoleptic properties of the product.

Typically, in the manufacture of sheeted snacks, dough is continuously formed into a sheet which is optionally further processed, for example reduced in thickness, before individual pieces are formed, e.g. cut, from the sheet and cooked. A dough is made by mixing dry, starchy ingredients with water, and optionally with other minor ingredients. The dough is formed into a coherent sheet by a sheeting device, usually using two or three parallel and cooperating rollers. The sheet is processed using further apparatus typically including conveyors, reducing rollers, and cutters. Pieces cut from the dough sheet must be easily and reliably transferrable to a cooking apparatus, for example a continuous fryer or oven. Manufacture of sheet snacks such as those of the invention is thus preferably a continuous process, offering considerable advantages in efficiency and economy. The dough must therefore have suitable handling properties both in the sheeting device itself and in the formed sheet which contacts various machine components during the process. A dough with good sheet processability thus requires a suitable combination of properties. Properties that must be considered include, for example, cohesiveness, viscoelasticity and stickiness. The handling properties of the dough and the sheet are a complex function of those properties, which are themselves a complex function of the ingredients used to form the dough. The low leach potato flake used in many sheeted snack products has particularly good binding properties and is considered to contribute to good handling properties in a sheeted dough. A reduction in low leach potato flake content would typically be expected to result in a loss in dough functionality.

In accordance with the invention, the low leach potato flakes are replaced at least in part by waxy wheat flour. The resultant products may have reduced acrylamide content as compared with corresponding products made using potato flakes, and in the case of some processes, especially those including frying, may be reduced substantially, for example by at least 50%. It has been found that the snack products of the invention can retain a crunchy, light "melting" texture notwithstanding the replacement of part or all of the low leach potato flake by other ingredients including waxy wheat flour. Moreover, importantly, it has been found that doughs made using a wheat flour comprising a waxy wheat flour are readily sheetable and have good sheet handling properties. Good sheet processability is in particular obtainable where the wheat flour comprises a precooked waxy wheat flour, and more especially a precooked waxy wheat flour having a gelatinized starch content that is such that the viscosity of a dispersion of 10g of the waxy wheat flour in 25g distilled water at 25°C is at least 200cP or, if the wheat flour comprises precooked waxy wheat flour and at least one other wheat flour, where the gelatinized starch content of the precooked waxy wheat flour is such that the viscosity of a dispersion of 10g the wheat flour (including said precooked waxy wheat flour and any other wheat flour present) in 25g distilled water at 25°C is at least 200cP.

Thus, in a preferred embodiment of the invention, the waxy wheat flour has a gelatinized starch content such that the viscosity of a dispersion of 10g of the waxy wheat flour, and preferably of a dispersion of 10g of the wheat flour including both waxy wheat flour and any other wheat flour present, in 25 g distilled water at 25°C is at least 200cP. The viscosity of a dispersion in water of a flour provides an indication of the degree of gelatinization of starch in the flour. Preferably, the waxy wheat flour has a gelatinized starch content such that the viscosity of a dispersion of 10g of the waxy wheat flour, preferably of the total wheat flour content including both waxy wheat flour and other wheat flour present, in 25 g distilled water at 25°C is at least 250cP, more preferably at least 300cP, especially at least 350cP. The viscosity value may be substantially higher, for example, 800cP, or 900cP in the case of some precooked waxy wheat flours usable in accordance with the invention. In a preferred embodiment described below, the viscosity of a dispersion of 10g of a precooked waxy wheat flour in 25 g distilled water at 25°C is about 780cP. The viscosity of a dispersion of a flour in distilled water at 25°C is to be understood herein as being the viscosity of a dispersion of 10g of the flour in 25g distilled water at 25°C, stirred at 160rpm at 25°C, the viscosity measurement being taken after stirring for 10 minutes.

The viscosity value may be determined using an RVA (Rapid Viscosity Analyser) test. The RVA test is performed to assess the level of cold-swelling of the wheat flour in the presence of water, since the level of cold-swelling on formation of the dough is an important determinant of the functionality of the snack dough formed. During the RVA test, the gelatinized starch within the flour is able, when dispersed in water, to absorb water and swell leading to an increase in the cold paste viscosity of the dispersion. This increase in viscosity is a good indicator of the ability of the flour to form a cohesive dough when mixed with water. The RVA test may be carried out on a waxy wheat flour per se or on a wheat flour blend a proportion of which is constituted by a waxy wheat flour. The test aims to determine the viscosity when swelling is essentially ended, and for that reason the measurement is taken 10 minutes after commencement of the test. The wheat flour used in the RVA test will be a dry flour, and will preferably be, or will contain, a precooked (cooked and dried) waxy wheat flour.

Waxy wheat flour produced from waxy wheat grain will contain starch in native starch form. The waxy wheat flours used in accordance with the invention advantageously contain gelatinized starch. The term "gelatinized starch" is used herein to refer to starch which is no longer native and has been wholly or only partly gelatinized. The gelatinized starch content typically results from treating the raw flour in a treatment at elevated temperature in a moist environment. The waxy wheat flour used in accordance with the invention is advantageously a precooked and preferably subsequently dried, waxy wheat flour. The precooking of the waxy wheat flour, which is carried out in the present of water or steam, results in the partial gelatinization of the starch content of the flour. Preferred precooked waxy wheat flours have a viscosity value of at least 200cP, preferably at least 250cP, more preferably at least 300cP, especially at least 350 cP, when 10g of the flour is dispersed in 25g distilled water at 25°C.

Preferred waxy wheat flours have been pre-cooked in a pre-cooking treatment in the presence of sufficient humidity to allow the starch present within the flour to gelatinize. The flour will then preferably be dried to achieve a moisture content of less than 15% and preferably less than 12% by weight, based on the total weight of the flour, and ground to achieve a powdery ingredient which can subsequently easily be combined with other ingredients to form a dough. Commercially available wheat flours including precooked waxy wheat flours typically have moisture contents of about 11% by weight, and except where explicitly indicated otherwise herein, references to wheat flours (including waxy wheat flours) are to flours having such moisture contents. If desired, however, the wet pre-cooked waxy wheat flour may instead be added directly into the dough, without further drying, in which case it will be appreciated that the moisture content will be substantially higher.

Preferably, the waxy wheat flour present is at least partly in the form of precooked waxy wheat flour. Preferably at least a major proportion, more preferably all or substantially all of the waxy wheat flour is in the form of precooked waxy wheat flour.

Gelatinization of starch involves disturbing the crystalline structure formed by amylopectin mainly within the starch granules. During cooking, starch granules will swell as they absorb water and partially or wholly lose their crystallinity to become digestible by humans. Starch granules can also be disrupted further and lose their integrity through strong mechanical treatment such as during cooking extrusion. Pre-cooked waxy wheat flours used in accordance with the invention have preferably been precooked by substantially non-mechanical methods, that is, they have not been subject to such strong mechanical treatment and resultant loss of integrity. The loss of starch crystallinity, and thence the degree of gelatinization, can be assessed by various well-known methods including differential scanning calorimetry or microscopy. In the context of this specification, however, the degree of gelatinization is determined by measuring the viscosity of a dispersion of the material in water.

Additionally, the invention provides a process for manufacture of a cooked snack food product having reduced acrylamide content, comprising:
preparing a dough including a wheat flour comprising a waxy wheat flour, the waxy wheat flour having a gelatinized starch content such that the viscosity of a dispersion of 10g of the wheat flour in 25 g distilled water at 25°C is at least 200cP;
forming the dough into a sheet;
cutting a multiplicity of pieces from the sheet; and
cooking said pieces to obtain a reduced acrylamide snack food product having a moisture content of not exceeding 3% by weight, preferably not exceeding 2% by weight, based on the total weight of the product.

The dough is advantageously formed by mixing the waxy wheat flour with water. Other optional dry ingredients may be premixed with the waxy wheat flour or added separately. Advantageously, the amount of water added is at least 30%, preferably at least 40%, by weight of the total weight of the ingredients including water.

It has been found that a waxy wheat flour having a gelatinized starch content such that the viscosity of a dispersion of 10g of the flour in 25 g distilled water at 25°C is at least 200cP delivers suitable functionality to doughs containing the flour. For example, the doughs have good viscoelastic properties including good elasticity and low stickiness, and thus offer good processability, for example, sheetability. Furthermore, the use of the flours to replace substantial proportions of potato flake results in little or no loss in sensory characteristics of the product. Products containing substantial amounts of the flours have in particular been found to have good texture and flavor, whilst having reduced acrylamide content compared with equivalent products having a higher content of potato-based material.

In some embodiments, the wheat flour used in the product and process of the invention may consist wholly of waxy wheat flour, preferably pre-cooked waxy wheat flour. In other embodiments, the wheat flour is a wheat flour blend made up of two or more wheat flours, at least one of which is a pre-cooked waxy wheat flour. In some embodiments, the wheat flour may be a wheat flour blend containing a pre-cooked waxy wheat flour and a non-waxy wheat flour, for example a common wheat flour. The non-waxy wheat flour may be, but is not necessarily, a pre-cooked wheat flour. Waxy wheat flours and non-waxy wheat flours (for example common wheat flours) used in accordance with the invention are advantageously refined white flours which, as indicated previously, are preferably pre-cooked.

In certain preferred embodiments, there is used as additional ingredient(s) in the product and process of the invention potato-derived material, for example one or more potato-derived materials selected from the group consisting of potato starch (pregelatinized potato starch and/or ungelatinized potato starch), potato granules, and potato flake. Where used, the potato flake may advantageously be low-leach potato flake. In some embodiments, the product advantageously further comprises potato flavouring.

Advantageously, the product has a moisture content of less than 3% by weight, more preferably of not more than 2% by weight. The product also preferably has a reduced acrylamide content. Advantageously the fat content of the product is not more than 40% by weight, based on the total weight of the product. Preferably, the fat content of the product is from 15 to 40%, more preferably from 20 to 40%, by weight based on the total weight of the product.

Advantageously, the dough comprises, in addition to said waxy wheat flour, at least one further flour, for example, at least one further cereal flour. Where present said cereal flour may comprise, for example, at least one flour selected from the group consisting of wheat flour, rice flour and maize flour. Where, as is preferred, the waxy wheat flour is precooked, the dough may optionally additionally comprise a native waxy wheat flour and/or a pre-cooked or native non-waxy wheat flour. Where the snack includes more than one wheat flour ingredient, those wheat flour ingredients are considered to be a wheat flour blend herein, even if they are not separately premixed before addition of other ingredients.

Advantageously, the waxy wheat flour is present in an amount of at least 8 % by weight based on the total weight of the ingredients, excluding water. Preferably, the waxy wheat flour is present in an amount of from 12 to 80 %, especially from 15 to 60%, by weight based on the total weight of ingredients excluding water. In certain embodiments the amount of waxy wheat flour is advantageously not more than 50% by weight, the amount of waxy wheat flour in those embodiments being, for example, 8% to 50% by weight, advantageously from 12 to 50% by weight, especially from 15 to 50% by weight based on the total weight of ingredients excluding water.

In one advantageous embodiment, the waxy wheat flour is present in an amount of from 8 to 40%, for example, from 10 to 25%, by weight based on the total weight of ingredients excluding water. Where the wheat flour is a wheat flour blend comprising one or more further wheat flours in addition to waxy wheat flour, the total wheat flour content may be from 8 to 95% by weight, based on the total weight of the ingredients, excluding water, and preferably from 12 to 90%, especially from 15 to 80%, for example from 20 to 70%, by weight based on the total weight of ingredients, excluding water. Advantageously, the pieces are cooked by frying, for example, the pieces may be fried at a temperature exceeding 120°C. Advantageously, the pieces are fried in an edible oil for example an oil that is high in unsaturated fat. Advantageously, the pieces are fried to an oil content of not more than 40% by weight, preferably not more than 35% by weight, based on the total weight of the fried products. Instead, the pieces may be cooked by, for example, baking, or a combination of baking and frying.

As indicated above, the dough may include some low leach potato flake and/or other potato-derived materials such as potato flour, potato starch, potato granules etc. Where one or more further ingredients are present, for example, a further cereal flour, such further ingredients are preferably present in an amount not exceeding 20% of the dry ingredients. For example, coarse flours, such as coarse rice flour, or emulsifiers can be used to prevent any blistering of the product during frying.

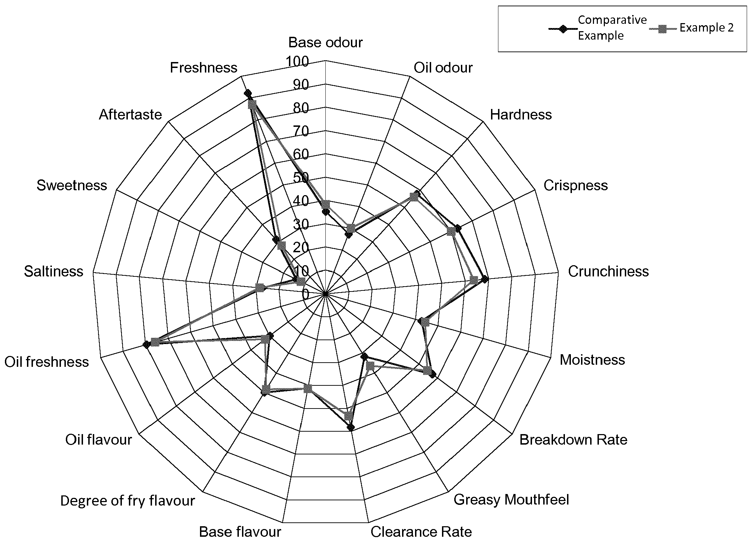

The invention will be illustrated by Examples below, and with reference to the accompanying drawing which compares the characteristics of the product of Example 2 according to the invention with the product of the Comparative Example below.

Unless explicitly stated to the contrary, references throughout this specification to "parts" means parts by weight and to, "%" means per cent by weight based on the total weight.

Waxy wheat flours used in Examples 1 to 3 have an amylose content that is not more than 2% by weight of the total weight of amylopectin and amylose.

### Analysis of level of precooking:

The viscosity values referred to herein relating to a gelatinized starch content of wheat flours may be determined by RVA (Rapid Viscosity Analyser) analysis of the wheat flour, using a RVA 4 (Newport Scientific) and applying a standard cold paste viscosity profile.

Viscosity values used in this specification are to be understood as those measurable according to the following method, in which "wheat flour" is to be understood as referring to a wheat flour made up wholly of waxy wheat flour or to a wheat flour blend of which a proportion is waxy wheat flour and the remainder is non-waxy wheat flour:
Viscosity Analysis Method: 10 g of wheat flour is added to 25 g of distilled water at 25°C. The flour and water are quickly mixed before the test is started. The RVA 4 is run using a standard RVA cold paste viscosity profile (25° Celsius for 12 min, paddle speed of 960 rpm for 10s followed by 160 rpm for the remainder of the test). The viscosity measurement is collected at 10 minutes.

The cold paste viscosity of the wheat flour, when measured by the above method, should be at least 200 cP, preferably at least 250 cP, more preferably at least 300 cP, and especially at least 350 centipoises in order to deliver the right functionality in the dough to allow proper processing and to obtain a product with acceptable sensory properties. Where the wheat flour is a wheat flour blend, the viscosity, as measured using the above method, of the waxy wheat flour component alone may be substantially in excess of 200 cP for example, 400 cP or more, especially 500 cP or more. The viscosity of the other wheat flour component(s) may be less than 200 cP, provided that the viscosity of the blend is not less than 200 cP.

The above Analysis Method is carried out using a flour with a moisture content of approximately 10% by weight based on the total flour weight. Where the moisture content of the flour differs materially from 10% the moisture content should be adjusted accordingly before carrying out the analysis, However, it will be appreciated that, in cases where a wet pre-cooked flour is used directly without drying, suitable modification to the quantities used in the Viscosity Analysis Method will be required to compensate for the additional water content. Such modification will be a matter of routine adaptation for those skilled in the art.

### Comparative Example

Potato Low leach flakes: 54 parts
Wheat starch / precooked common wheat flour 10 parts
Water: 50 parts
Salt: 1.5 parts
Emulsifier: 0.5 parts

The dry ingredients were mixed. The water was added and mixing continued to form a dough. The dough was sheeted and pieces cut from the sheet using a roller cutter. The pieces are fried in sunflower oil at a temperature of 160 to 180°C. The fried pieces were removed from the fryer and excess oil allowed to drain. The resultant product had a sunflower oil content (from frying) of 34% by weight based on the total product weight and a moisture content of not more than 1.8% by weight based on the total product weight.

### Example 1

Precooked waxy wheat flour (RVA test value* 780cP): 38 parts
Potato low leach flakes: 22 parts
Rice flour coarse: 4 parts
Water: 50 parts
Salt: 1.5 parts
Emulsifiers: 0.5 parts

*RVA test values are as measured using an RVA 4 Analyser (Newport Scientific) according to the Viscosity Analysis Method described above.

The dry ingredients were mixed. The water was added and mixing continued to form a dough. The dough was sheeted and pieces cut from the sheet using a roller cutter. The pieces were fried in sunflower oil at a temperature of 160 to 180°C. The fried pieces were removed from the fryer and excess oil allowed to drain. The resultant product was crunchy and light and had a sunflower oil content (from frying) of 34% by weight based on the total product weight. The moisture content was not more than 1.8% by weight based on the total product weight. The acrylamide content was 60% lower than that of the product of the Comparative Example above.

### Example 2

Precooked waxy wheat flour (RVA test value* 780cP): 18 parts
Heat-treated common wheat flour (RVA test value* 110cP): 20 parts
(RVA test value* of the combined wheat flours: 250cP)
Potato low leach flakes: 22 parts
Rice flour coarse: 4 parts
Water: 50 parts
Salt: 1.5 parts
Emulsifiers: 0.5 parts

*RVA test values are as measured using an RVA 4 Analyser (Newport Scientific) according to the Viscosity Analysis Method described above.

The term "heat-treated" in relation to common wheat flour means common wheat flour that has been heated to a temperature sufficient to degrade unwanted contaminants such as bacteria, without added moisture.

Fried products were made using the method described in Example 1. The resultant product had a sunflower oil content (from frying) of 34% by weight based on the total product weight. The product had organoleptic characteristics, including hardness, crispness, crunchiness, flavour, odour and mouthfeel, very similar to the product of the Comparative Example, but had a materially (at least 60%) lower acrylamide content. The characteristics of the product of Example 2 are illustrated in the spider graph of the accompanying drawings. The product had a flavour and texture resembling products made with a substantially higher proportion of potato-based ingredients.

### Example 3

Precooked waxy wheat flour(RVA test value* 780cP: 28 parts
Heat-treated common wheat flour RVA test value* 100cP): 32 parts
(RVA test value* of the combined wheat flours: 250cP)
Rice flour coarse: 4 parts
Water: 50 parts
Salt: 1.5 parts
Emulsifiers: 0.5 parts

*RVA test values are as measured using an RVA 4 Analyser (Newport Scientific) according to the Viscosity Analysis Method described above.

Fried products having a very low acrylamide content are made using the method described in Example 1. The resultant product was crunchy and light and had a sunflower oil content (from frying) of 34% by weight based on the total product weight and a moisture content of not more than 1.8% by weight based on the total product weight. The acrylamide content was at least 60% lower than that of the product of the Comparative Example above. Optionally, potato flavour could be used in the recipe of Example 3, generating a product more resembling products made from potato-based material.

## Claims

1. A cooked, sheeted snack food product having a reduced acrylamide content, including a wheat flour which comprises waxy wheat flour, and low leach potato flakes, wherein the waxy wheat flour is present in an amount of not more than 50 % by weight, based on the total weight of ingredients excluding water, and said snack food product having a moisture content of not more than 3 % by weight, based on the total weight of the product.

2. The cooked, sheeted snack food product according to claim 1, wherein the waxy wheat flour is present in an amount of from 8 to 40 % by weight, based on the total weight of ingredients excluding water.

3. The cooked, sheeted snack food product according to claim 1 or claim 2, further comprising potato flavouring.

4. The cooked, sheeted snack food product according to any one of the preceding claims, having a moisture content not more than 2% by weight, based on the total weight of the product.

5. The cooked, sheeted snack product according to any one of the preceding claims, wherein the snack product is a fried snack product or a baked snack product.

6. The cooked, sheeted snack food product according to any one of claims 1 to 5, wherein said snack food product is obtainable by sheeting and cooking a dough comprising waxy wheat flour in an amount of not more than 50 % by weight, based on the total weight of dough ingredients excluding water, and
wherein the waxy wheat flour comprises precooked waxy wheat flour, preferably having a gelatinized starch content that is such that the viscosity of a dispersion of 10 g of the flour in 25 g distilled water at 25 °C is at least 500 cP.

7. A process for manufacture of a cooked snack food product having reduced acrylamide content, comprising:
preparing a dough including a wheat flour and low leach potato flakes, wherein the wheat flour comprises a waxy wheat flour, said waxy wheat flour being present in an amount of not more than 50 % by weight, based on the total weight of dough ingredients excluding water, and wherein the waxy wheat flour present is at least partly in the form of precooked waxy wheat flour;
forming the dough into a sheet;
cutting a multiplicity of pieces from the sheet; and
cooking said pieces to obtain a snack food product having a moisture content of not exceeding 3% by weight based on the total weight of the food product.

8. The process according to claim 7, wherein the wheat flour has a gelatinized starch content such that the viscosity of a dispersion of 10g the flour in 25 g distilled water at 25°C is at least 200cP.

9. The process according to claim 7, wherein the precooked waxy wheat flour has a gelatinized starch content that is such that the viscosity of a dispersion of 10g of the flour in 25g distilled water at 25°C is at least 500cP.

10. The process according to claim 7 or claim 9, wherein the dough comprises, in addition to said waxy wheat flour, at least one further cereal flour.

11. The process according to claim 10, wherein said at least one further cereal flour comprises common wheat flour.

12. The process according to claim 11, wherein the common wheat flour comprises precooked common wheat flour.

13. The process according to any one of claims 7 to 12, wherein the waxy wheat flour is present in the dough in an amount of at least 8 % by weight, based on the total weight of the ingredients excluding water.

14. The process according to any one of claims 7 to 13, wherein the waxy wheat flour is present in the dough in an amount of at most 40 % by weight, based on the total weight of the ingredients excluding water.

15. A process according to any one of claims 7 to 14, wherein the pieces are fried or baked.

16. Use of waxy wheat flour as replacement of at least part of low leach potato flakes in a dough for a cooked, sheeted snack food product for reducing the acrylamide content in the cooked snack food product.

17. Use according to claim 16, wherein the cooked, sheeted snack food product is prepared by a process comprising:
preparing a dough comprising a waxy wheat flour and low leach potato flakes;
forming the dough including said waxy wheat flour and the low leach potato flakes into a sheet;
cutting a multiplicity of pieces from the sheet;
cooking said pieces to obtain a reduced acrylamide snack food product having a moisture content of not exceeding 3% by weight, based on the total weight of the product.

18. Use according to claim 16 or 17, wherein the waxy wheat flour present is at least partly in the form of precooked waxy wheat flour.

## Patentansprüche

1. Gekochtes, gewalztes Snack-Nahrungsmittelprodukt mit einem reduzierten Acrylamidgehalt, welches ein Weizenmehl, das wachsartiges Weizenmehl umfasst, und Kartoffelflocken mit geringer Auslaugung enthält, wobei das wachsartige Weizenmehl in einer Menge von nicht mehr als 50 Gew.-%, bezogen auf das Gesamtgewicht der Bestandteile ohne Wasser, vorhanden ist, und das Snack-Nahrungsmittelprodukt einen Feuchtigkeitsgehalt von nicht mehr als 3 Gew.-%, bezogen auf das Gesamtgewicht des Produktes, aufweist.

2. Gekochtes, gewalztes Snack-Nahrungsmittelprodukt nach Anspruch 1, wobei das wachsartige Weizenmehl in einer Menge von 8 bis 40 Gew.-%, bezogen auf das Gesamtgewicht der Bestandteile ohne Wasser, vorhanden ist.

3. Gekochtes, gewalztes Snack-Nahrungsmittelprodukt nach Anspruch 1 oder Anspruch 2, das ferner Kartoffelaroma umfasst.

4. Gekochtes, gewalztes Snack-Nahrungsmittelprodukt nach einem der vorhergehenden Ansprüche, welches einen Feuchtigkeitsgehalt von nicht mehr als 2 Gew.-%, bezogen auf das Gesamtgewicht des Produkts, aufweist.

5. Gekochtes, gewalztes Snack-Produkt nach einem der vorhergehenden Ansprüche, wobei das Snackprodukt ein frittiertes Snackprodukt oder ein gebackenes Snackprodukt ist.

6. Gekochtes, gewalztes Snack-Nahrungsmittelprodukt nach einem der Ansprüche 1 bis 5, wobei das Snack-Nahrungsmittelprodukt durch Auswalzen und Kochen eines Teigs erhältlich ist, der wachsartiges Weizenmehl in einer Menge von nicht mehr als 50 Gew.-%, bezogen auf das Gesamtgewicht der Teigbestandteile ohne Wasser, umfasst, und
wobei das wachsartige Weizenmehl vorgekochtes wachsartiges Weizenmehl umfasst, das vorzugsweise einen Gehalt an gelatinisierter Stärke aufweist, der so ist, dass die Viskosität einer Dispersion von 10 g des Mehls in 25 g destilliertem Wasser bei 25 °C mindestens 500 cP beträgt.

7. Verfahren zur Herstellung eines gekochten Snack-Nahrungsmittelprodukts mit reduziertem Acrylamidgehalt, umfassend:
Zubereiten eines Teigs, welcher ein Weizenmehl und Kartoffelflocken mit geringer Auslaugung enthält, wobei das Weizenmehl ein wachsartiges Weizenmehl umfasst, wobei das wachsartige Weizenmehl in einer Menge von nicht mehr als 50 Gew.-%, bezogen auf das Gesamtgewicht der Teigbestandteile ohne Wasser, vorhanden ist, und wobei das vorhandene wachsartige Weizenmehl zumindest teilweise in der Form von vorgekochtem wachsartigen Weizenmehl ist;
Formen des Teiges zu einer Bahn;
Schneiden einer Vielzahl von Stücken aus der Bahn; und
Kochen der Stücke, um ein Snack-Nahrungsmittelprodukt zu erhalten, das einen Feuchtigkeitsgehalt aufweist, der 3 Gew.-%, bezogen auf das Gesamtgewicht des Nahrungsmittelprodukts, nicht überschreitet.

8. Verfahren nach Anspruch 7, wobei das Weizenmehl einen Gehalt an gelatinisierter Stärke aufweist, so dass die Viskosität einer Dispersion von 10 g des Mehls in 25 g destilliertem Wasser bei 25 °C mindestens 200 cP beträgt.

9. Verfahren nach Anspruch 7, wobei das vorgekochte wachsartige Weizenmehl einen Gehalt an gelatinisierter Stärke aufweist, der so ist, dass die Viskosität einer Dispersion von 10 g des Mehls in 25 g destilliertem Wasser bei 25 °C mindestens 500 cP beträgt.

10. Verfahren nach Anspruch 7 oder Anspruch 9, wobei der Teig zusätzlich zu dem wachsartigen Weizenmehl mindestens ein weiteres Getreidemehl umfasst.

11. Verfahren nach Anspruch 10, wobei das mindestens eine weitere Getreidemehl Weichweizenmehl umfasst.

12. Verfahren nach Anspruch 11, wobei das Weichweizenmehl vorgekochtes Weichweizenmehl umfasst.

13. Verfahren nach einem der Ansprüche 7 bis 12, wobei das wachsartige Weizenmehl in dem Teig in einer Menge von mindestens 8 Gew.-%, bezogen auf das Gesamtgewicht der Bestandteile ohne Wasser, vorhanden ist.

14. Verfahren nach einem der Ansprüche 7 bis 13, wobei das wachsartige Weizenmehl in dem Teig in einer Menge von höchstens 40 Gew.-%, bezogen auf das Gesamtgewicht der Bestandteile ohne Wasser, vorhanden ist.

15. Verfahren nach einem der Ansprüche 7 bis 14, wobei die Stücke frittiert oder gebacken werden.

16. Verwendung von wachsartigem Weizenmehl als Ersatz von mindestens einem Teil von Kartoffelflocken mit geringer Auslaugung in einem Teig für ein gekochtes, gewalztes Snack-Nahrungsmittelprodukt zur Verringerung des Acrylamidgehalts in dem gekochten Snack-Nahrungsmittelprodukt.

17. Verwendung nach Anspruch 16, wobei das gekochte, gewalzte Snack-Nahrungsmittelprodukt durch ein Verfahren hergestellt wird, umfassend:
Zubereiten eines Teigs, der ein wachsartiges Weizenmehl und Kartoffelflocken mit geringer Auslaugung umfasst;
Formen des das wachsartige Weizenmehl und die Kartoffelflocken mit geringer Auslaugung enthaltenden Teiges zu einer Bahn;
Schneiden einer Vielzahl von Stücken aus der Bahn;
Kochen der Stücke, um ein Snack-Nahrungsmittelprodukt mit reduziertem Acrylamid zu erhalten, das einen Feuchtigkeitsgehalt aufweist, der 3 Gew.-%, bezogen auf das Gesamtgewicht des Produkts, nicht übersteigt.

18. Verwendung nach Anspruch 16 oder 17, wobei das vorhandene wachsartige Weizenmehl zumindest teilweise in der Form von vorgekochtem wachsartigen Weizenmehl ist.

## Revendications

1. Produit alimentaire de snack en feuille, cuit possédant une teneur réduite en acrylamide, y compris une farine de blé qui comprend une farine de blé cireuse, et des flocons de pommes de terre de basse lixiviation, dans lequel la farine de blé cireux est présente dans une quantité inférieure à 50 % en poids, sur la base du poids total des ingrédients en excluant l'eau, et ledit produit alimentaire de snack possédant une teneur en humidité inférieure à 3 % en poids, sur la base du poids total du produit.

2. Produit alimentaire de snack en feuille, cuit selon la revendication 1, dans lequel la farine de blé cireuse est présente dans une quantité allant de 8 à 40 % en poids, sur la base du poids total des ingrédients en excluant l'eau.

3. Produit alimentaire de snack en feuille, cuit selon la revendication 1 ou la revendication 2, comprenant en outre un aromatisant à base de pomme de terre.

4. Produit alimentaire de snack en feuille, cuit selon l'une quelconque des revendications précédentes, possédant une teneur en humidité inférieure à 2 % en poids, sur la base du poids total du produit.

5. Produit alimentaire de snack en feuille, cuit selon l'une quelconque des revendications précédentes, dans lequel le produit de snack consiste en un produit de snack frit ou un produit de snack de boulangerie.

6. Produit alimentaire de snack en feuille, cuit selon l'une quelconque des revendications 1 à 5, dans lequel ledit produit alimentaire de snack peut être obtenu en mettant en feuille et en cuisinant une patte comprenant de la farine de blé cireuse dans une quantité inférieure à 50 % en poids, sur la base du poids total des ingrédients de pâte en excluant l'eau, et
dans lequel la farine de blé cireuse comprend de la farine de blé cireuse précuite, de préférence possédant une teneur en amidon gélatinisé qui est telle que la viscosité d'une dispersion de 10 g de la farine dans 25 g d'eau distillée à 25° C est d'au moins 500 cP.

7. Processus de fabrication d'un produit alimentaire de snack cuit possédant une teneur réduite en acrylamide, consistant à :
préparer une patte comprenant une farine de blé et des flocons de pommes de terre de basse lixiviation, dans lequel la farine de blé comprend une farine de blé cireuse, ladite farine de blé cireuse étant présente dans une quantité inférieure à 50 % en poids, sur la base du poids total des ingrédients de pâte en excluant l'eau, et dans lequel la farine de blé cireuse présente est au moins partiellement sous la forme d'une farine de blé cireuse précuite ;
former la patte sur une feuille ;
couper une multiplicité de pièces à partir de la feuille ; et
cuire lesdites pièces pour obtenir un produit alimentaire de snack possédant une teneur en humidité inférieure à 3 % en poids sur la base du poids total du produit alimentaire.

8. Processus selon la revendication 7, dans lequel la farine de blé possède une teneur en amidon j'ai latinisé de sorte que la viscosité d'une dispersion de 10 g de farine dans 25 g d'eau distillée à 25 °C est inférieure à 200 cP.

9. Processus selon la revendication 7, dans lequel la farine de blé cireuse précuite possède une teneur en amidon gélatinisé qui est telle que la viscosité d'une dispersion de 10 g de la farine dans 25 g d'eau distillée à 25 °C et d'au moins 500 cP.

10. Processus selon la revendication 7 ou la revendication 9, dans lequel la pâte comprend, en plus de ladite farine de blé cireuse, au moins une farine de céréales supplémentaire.

11. Processus selon la revendication 10, dans lequel ladite au moins une farine de céréales supplémentaire comprend de la farine de blé commune.

12. Processus selon la revendication 11, dans lequel la farine de blé se commune comprend de la farine de blé commune précuite.

13. Processus selon l'une quelconque des revendications 7 à 12, dans lequel la farine de blé cireuse est présente dans la pâte dans une quantité d'au moins 8 % en poids, sur la base du poids total des ingrédients en excluant l'eau.

14. Processus selon l'une quelconque des revendications 7 à 13, dans lequel la farine de blé cireux est présente dans la pâte dans une quantité maximale de 40 % en poids, sur la base du poids total des ingrédients en excluant l'eau.

15. Processus selon l'une quelconque des revendications 7 à 14, dans lequel les pièces sont frites ou cuites.

16. Utilisation d'une farine de blé cireuse comme remplacement d'au moins une partie des flocons de pommes de terre de basse lixiviation dans une patte pour un produit alimentaire de snack en feuille, cuit pour réduire la teneur en acrylamide dans le produit alimentaire de snack cuit.

17. Utilisation selon la revendication 16, dans laquelle le produit alimentaire de snack en feuille, cuit est préparé selon un processus consistant à :
préparer une patte comprenant une farine de blé cireuse et des flocons de pommes de terre de basse lixiviation ;
former la patte comprenant ladite farine de blé cireuse et lesdits flocons de pommes de terre de basse lixiviation dans une feuille ;
couper une multiplicité de pièces à partir de la feuille ;
cuire lesdites pièces pour obtenir un produit alimentaire de snack à acrylamide réduit possédant une teneur en humidité inférieure à 3 % en poids, sur la base du poids total du produit.

18. Utilisation selon la revendication 16 ou la revendication 17, dans laquelle la farine de blé cireuse présente est au moins partiellement sous la forme d'une farine de blé cireuse précuite.
